(19) **Europäisches Patentamt**

**European Patent Office**

**Office européen des brevets**

(11) **EP 1 522 049 B1**

(12) **EUROPEAN PATENT SPECIFICATION**

(45) Date of publication and mention
of the grant of the patent:
**15.11.2006 Bulletin 2006/46**

(21) Application number: **03740943.0**

(22) Date of filing: **02.07.2003**

(51) Int Cl.:
***G06T 9/00*** (2006.01)

(86) International application number:
**PCT/IB2003/003034**

(87) International publication number:
**WO 2004/006187 (15.01.2004 Gazette 2004/03)**

(54) **TOPOLOGICAL IMAGE MODEL**

TOPOLOGISCHES BILDERMODELL

MODELE D'IMAGE TOPOLOGIQUE

(84) Designated Contracting States:
**AT BE BG CH CY CZ DE DK EE ES FI FR GB GR
HU IE IT LI LU MC NL PT RO SE SI SK TR**

(30) Priority: **04.07.2002 EP 02077692**

(43) Date of publication of application:
**13.04.2005 Bulletin 2005/15**

(73) Proprietor: **Koninklijke Philips Electronics N.V.
5621 BA Eindhoven (NL)**

(72) Inventors:
• **VAN OVERVELD, Cornelius, W., A., M.
NL-5656 AA Eindhoven (NL)**
• **ERNST, Fabian, E.
NL-5656 AA Eindhoven (NL)**
• **REDERT, Peter-Andre
NL-5656 AA Eindhoven (NL)**
• **RODRIGUES, Rui, P., A.
NL-5656 AA Eindhoven (NL)**
• **WILINSKI, Piotr
NL-5656 AA Eindhoven (NL)**

(74) Representative: **Eleveld, Koop Jan
Philips Intellectual Property & Standards,
P.O. Box 220
5600 AE Eindhoven (NL)**

(56) References cited:
**EP-A- 1 003 131**

• **AGHBARI Z ET AL: "VST-model: a uniform
topological modeling of the visual-spatio-
temporal video features" MULTIMEDIA
COMPUTING AND SYSTEMS, 1999. IEEE
INTERNATIONAL CONFERENCE ON FLORENCE,
ITALY 7-11 JUNE 1999, LOS ALAMITOS, CA, USA,
IEEE COMPUT. SOC, US, 7 June 1999
(1999-06-07), pages 163-168, XP010519376 ISBN:
0-7695-0253-9**
• **PORIKLI F M ET AL: "An unsupervised multi-
resolution object extraction algorithm using
video-cube" PROCEEDINGS 2001
INTERNATIONAL CONFERENCE ON IMAGE
PROCESSING. ICIP 2001. THESSALONIKI,
GREECE, OCT. 7 - 10, 2001, INTERNATIONAL
CONFERENCE ON IMAGE PROCESSING, NEW
YORK, NY: IEEE, US, vol. 1 OF 3. CONF. 8, 7
October 2001 (2001-10-07), pages 359-362,
XP010563772 ISBN: 0-7803-6725-1**
• **FELS S ET AL: "Techniques for interactive video
cubism" PROCEEDINGS ACM MULTIMEDIA
2000, PROCEEDINGS OF MULTIMEDIA 2000, LOS
ANGELES, CA, USA, 30 OCT.-4 NOV. 2000, pages
368-370, XP001173137 2000, New York, NY, USA,
ACM, USA ISBN: 1-58113-198-4**

**Description**

The invention relates to a method of transforming a computer representation of an N-dimensional first object into a computer model of the first object.

In a further embodiment the invention also relates to a compression method of transforming a computer representation of an N-dimensional object into a compression model of the object.

In a another further embodiment the invention also relates to a method of decompressing a compressed video signal to a computer representation of an N-dimensional object.

The invention also relates to a computer program for performing a method of transforming a computer representation of an N-dimensional first object into a computer model of the first object.

In a further embodiment the invention also relates to a computer program for performing a compression method of transforming a computer representation of an N-dimensional object into a compression model of the object.

In another further embodiment the invention also relates to a computer program for performing a method of decompressing a compressed video signal to a computer representation of an N-dimensional object.

The invention also relates to an apparatus for transforming a computer representation of an N-dimensional first object into a computer model of the first object, the apparatus comprising acquiring means for acquiring the computer representation of the first object; -processing means for transforming the computer representation of the first object; and output means for outputting the computer model.

In a further embodiment the invention also relates to a video decompression apparatus for decompressing a compressed video signal to a computer representation of an N-dimensional object, the video decompression apparatus comprising: acquiring means for acquiring the compressed video signal;

- processing means for generating the computer representation on the basis of the compressed video signal, and output means for outputting the computer representation.

The invention also relates to a computer readable medium comprising a data structure comprising a cellular space for representing a digitized N-dimensional object.

A method of transforming a computer representation of an N-dimensional first object is known from the book by M. Ghanbari, titled "Video Coding, an introduction to standard codes" The Institution of Electrical Engineers, 1999, ISBN 0 85296 762 4, pp. 46-48.

In this embodiment, the computer representation is a digitized representation of a set of two-dimensional images representing recordings of three-dimensional objects in a space recorded by projection in the image plane of a camera, at consecutive instants. The images consist of a matrix of pixel positions to which grey values are assigned.

In most applications of the known method, such as digital television transmission or recording on a DVD disc, fixed blocks of pixels are transformed into a computer model in accordance with a little adaptive pattern. An example of an application is a recording on a DVD disc making use of the MPEG2 standard in which the computer model comprises, inter alia, discrete cosine transform (DCT) coefficients computed for a priori fixed blocks of pixels. Another application of the known system is a video application in accordance with the MPEG4 standard which allows more adaptivity. For example, 2-dimensional objects can be coded in an object-based manner in MPEG4. The MPEG4 standard also allows a three-dimensional model of a human face, animated with respect to time, as a compression model of a human face in a video sequence. It is a drawback of the current MPEG4 compression systems that there is no satisfactory method of automatically modeling voxel representations of three-dimensional objects in a video cube. A voxel representation represents a three-dimensional object as a set of cubes of elementary dimensions, referred to as voxels. A voxel may be defined as a three-dimensional geometrical position associated with a number which indicates, for example, a grey value of a pixel in a video image. A video cube is a cube of voxels formed by placing a plurality of video images, which succeed each other in time, one behind the other.

Cellular models are known from an article titled "A cellular model for multi-objects multi-dimensional homotopic deformations" by Yann Cointepas et al. and published in Pattern recognition 34 (2001) pages 1785-1798. This article describes a cellular model in terms of a triplet (E, V, P). Herein E is a set of cells that correspond to voxels, faces of voxels, intersection lines between the faces and intersection points between the faces. V is a set connectivity relationship, i.e. a set of edges between the cells, which expresses which faces are faces of which voxels etc. P is a modeled object dependent partition of the graph defined by the cells and edges, indicating which cells belong to the object. This type of cellular model provides no information about the distinction between inherent object borders and borders in an image that arise due to occlusion of objects in an image.

It is, inter alia, a first object of the application to provide a transformation method for modeling N-dimensional objects by means of a user-friendly computer model.

It is, inter alia, a second object of the application to provide an efficient method of compressing an N-dimensional object.

It is, inter alia, a third object of the application to provide a method of decompressing an efficiently compressed video signal.

It is, inter alia, a fourth object of the application to provide a method of transforming a first cellular space model into a second cellular space model so that transformations of the associated N-dimensional objects can be modeled efficiently.

It is, inter alia, a fifth object of the application to provide a computer program for performing the transformation method.

It is, inter alia, a sixth object of the application to provide a computer program for performing the compression method.

It is, inter alia, a seventh object of the application to provide a computer program for performing the decompression method.

It is, inter alia, an eighth object of the application to provide an apparatus for performing the transformation method.

It is, inter alia, a ninth object of the application to provide an apparatus for performing the decompression method.

It is, inter alia, a tenth object of the application to provide an easily processable data representation for representing an N-dimensional object.

The first object is realized by the method of claim 1.

A manifold is the mathematical name for a collection of points having a dimension D. An example of a manifold is a plane. An example of a plane in a video cube is the plane which is built up from the projections in consecutive video images, as picked up by a camera, from the upper side of, for example, a square object. In each individual video image, this projection forms a line and all lines jointly form a plane. The plane formed by the upper sides of an object may of course also be curved. Besides two spatial dimensions associated with a video image and the time dimension, a third spatial dimension may be present in a three-dimensional television application. When a scale dimension is also added, the number of dimensions ofN is equal to five. Additional dimensions can be added to represent other parameters, for example, computed on the basis of the texture of an object.

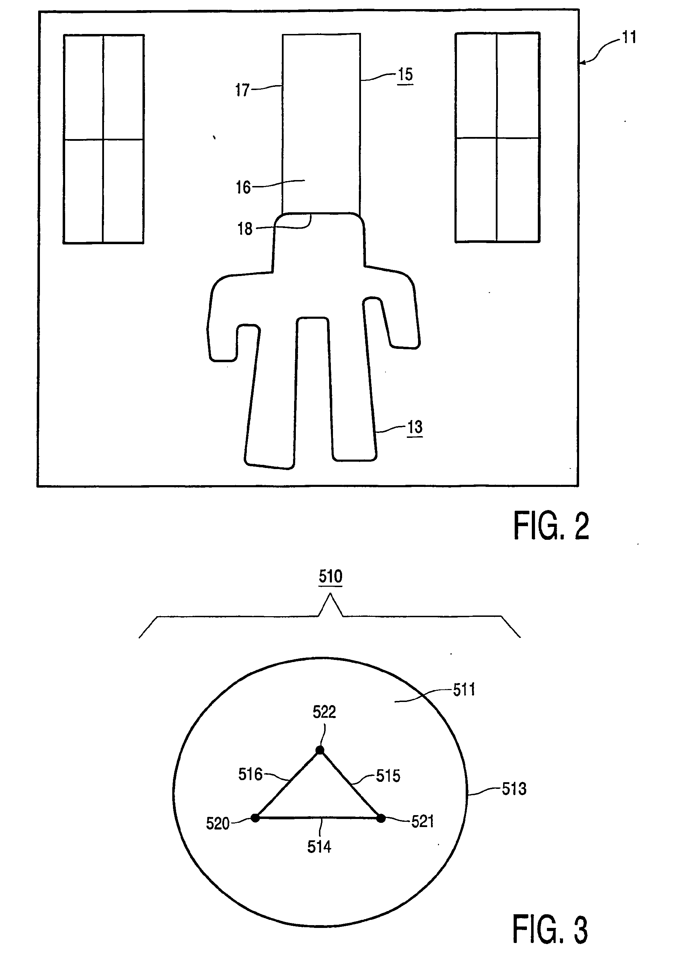

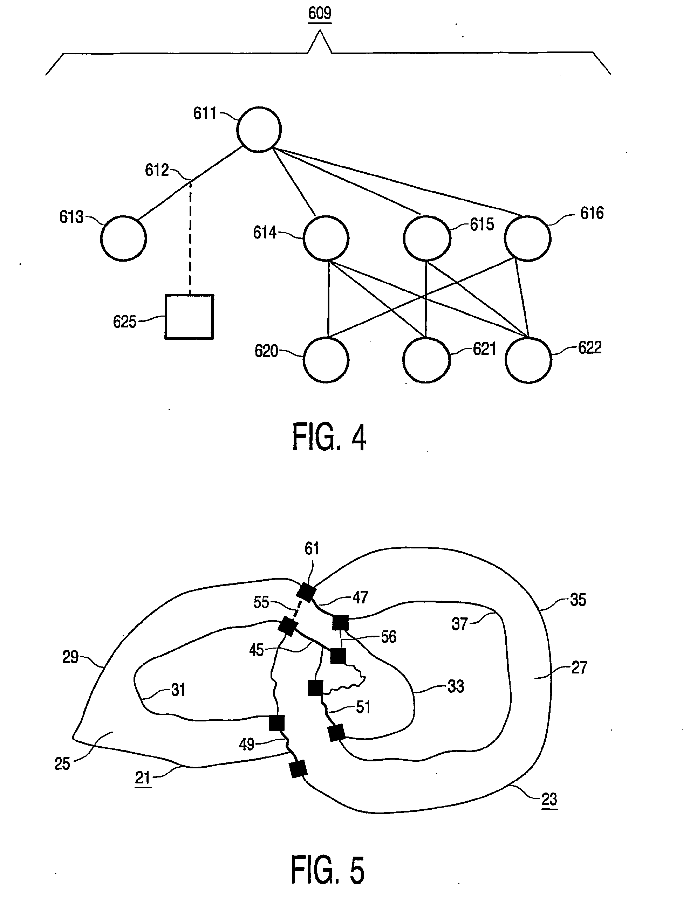

A cellular space is a specific instance of a graph. A graph is a mathematical concept and consists of cells and edges. The cellular space will generally be built up in such a way that a cell corresponds to each manifold of the N-dimensional object, starting from the N-dimensional manifold forming the interior of the object and going across all lower dimensional manifolds on the border of the border up to and including manifolds on the border with a zero dimension, being points. A specific property of a cellular space is that an edge is added between a first cell corresponding to a first manifold having a dimension D and a second cell corresponding to a second manifold having a lower dimension with one dimension less, D-1, if the second manifold is situated on the border of the first manifold. All lower-dimensional manifolds on the border of a mother object are thus explicitly modeled by means of a cell and an edge in the cellular space model. An example of building up a cellular graph is illustrated with reference to Fig. 3 and Fig. 4. In the transformation method according to the invention, an indicator is added to an edge, which indicator indicates whether the second manifold with dimension D-1 on the border of a first manifold with dimension D forms part of the object of the first manifold. What is meant by "forming part of" will be illustrated with reference to Fig. 2.

There are many methods of modeling N-dimensional objects in the computer graphics technique. However, these methods have a metrical nature. An example is an octree in which a three-dimensional object is partitioned into cubes of different dimensions until the smallest cubes approach the irregular outer surface with a given precision. Other models model the surface of an N-dimensional object such as, for example, a triangular mesh or a Gaussian bump model. The cellular space is, however, a topologic representation of the N-dimensional object which allows an indication of the components the object consists of, which components can be subsidiarily modeled, if necessary, by means of a metric model.

It is advantageous when, for a computer representation of a second object, a third cell belonging to a third manifold is added to the cellular space model. When all manifolds of both objects are represented in one single cellular space, their topological relation is convenient and can easily be processed. Two adjoining manifolds belonging to a first and a second cell have a common border manifold of a lower dimension belonging to a third cell. The cellular space has a first edge between the third and the first cell and a second edge between the third and the second cell, which model the border relations of the border manifold. Since the border manifold generally forms part of only one manifold, the indicator of one of the edges has the value of "forming part of" and the indicator of the other edge has the value of "not forming part of". By means of the information of all objects, comprising the cellular space, it is easy to predict, for example, the temporal evolution of an object or to change it in a computer graphics application. The indicator supplies information about the fact which of the two objects in a three-dimensional space which is captured by the camera into a video sequence, is the most backwardly positioned.

In one embodiment, a three-dimensional video cube consisting of two-dimensional images associated with consecutive instants and being placed one after the other is partitioned into a first object and a second object, and the transformation generates a first cell and a third cell, the dimension of the first manifold and the third manifold being at most three.

This embodiment occurs, for example, in a two-dimensional television application. The advantage of the method according to the invention is that geometrical transformations of objects can be more easily modeled in time by means of the cellular space model. All voxels in the video cube are assigned to an object, for example, a first three-dimensional space-time object represents a person who is walking and the second object is the person's environment comprising all other voxels. When a video cube comprises P pictures chosen from a video sequence, the person can only occur, for example, in a number ofP-K pictures, or alternatively, he may also occur in further pictures outside the chosen video cube. Each object in the video cube is modeled in the same cellular space model.

It is also interesting when the transformation assigns a value to the indicator on the basis of a computation of at least one geometrical property, derived from values of the computer representation. The cellular space model is automatically generated on the basis of a real-life video sequence. All kinds of properties of objects in the video sequence can be measured in order that the indicator can be given the correct value with great certainty by means of one or more of these properties.

In one embodiment using a robust computation of the indicator, the transformation assigns a value to the indicator on the basis of a computation of a change with respect to time of the surface, of a cross-section of the first object with a plane of a two-dimensional image in the video cube at an instant. In fact, when a two-dimensional cross-section of an object in a video sequence appears or disappears behind another object cross-section, the number of pixels associated with the cross-section changes because some pixels of the object are invisible.

The second object is realized in that the transformation makes use of a cellular space model. In addition to a cellular space model, a compression model is also generated. The compression model comprises metric information, for example, about the precise form of the interior of the first object. The advantage of the method according to the invention is that objects in the video cube are compressed by means of a three-dimensional model, while objects in the prior art of MPEG4 are compressed two-dimensionally by modeling and compressing only two-dimensional cross-sections in different television images. By using a three-dimensional compression model, the achieved compression factor at the same image quality is higher than in two-dimensional compression. Alternatively, at a fixed compression factor, the image quality in three-dimensional compression is higher than in two-dimensional compression. Due to its fixed pattern of partitioning an image into 16x16 pixel blocks and temporal prediction of images, MPEG2 does not completely utilize the three-dimensional character of objects in the video cube. For an efficient compression, the fact that objects are occluded must be explicitly taken into account. Occlusion occurs when a first object moves behind a preceding second object in a three-dimensional space, or when the first object appears from behind the second object.

Patent application WO-A-00/64148 describes a compression method which is based on matching two-dimensional segments. Some techniques described in this application may be useful for obtaining an N-dimensional object from a video cube, required for the method according to the invention. However, the patent application does not explicitly use N-dimensional objects but only two-dimensional projections thereof.

The third object is realized in that the decompression method makes use of a cellular space model. The explicit coding of objects in a cellular space model allows advanced compression and decompression. In fact, during regeneration of N-dimensional objects, it is computed by means of the cellular space model which pixels of objects are visible.

The fourth object is realized in that the first plurality of cells is different from the second plurality of cells. When, for example, a first N-dimensional object is to be compared with a second N-dimensional object, for example, for a search for picture material on the Internet, it will be easy to compare their associated cellular space models. Before associating cells and edges of both cellular space models with each other, it may be easy to first transform one of the cellular space models. For example, a roof of an object representing a house is flat for the cellular space models modeling a house as specified in a query, and pointed for a second house in an image on the Internet. For example, the cell representing the flat roof may then be re-used for the first slanting side of the pointed roof and add an extra cell for the second slanting side. Techniques of the same kind are useful for computer graphics applications.

The fifth object is realized by providing a code comprising a computer program for the transformation method.

The sixth object is realized by providing a code comprising a computer program for the compression method.

The seventh object is realized by providing a code comprising a computer program for the decompression method.

The eighth object is realized in that the processing means are capable of generating a cellular space model with a first cell belonging to a first manifold having a higher dimension which is equal to N, and a second cell belonging to a second manifold having a lower dimension which is equal to N-1 situated on the border of the first manifold, and an edge between the first cell and the second cell, and are capable of assigning an indicator to the edge, which indicates whether the second manifold forms part of the border of the first manifold.

The ninth object is realized in that the processing means have access to a cellular space model.

The tenth object is realized in that an indicator is assigned to an edge between a first cell and a second cell of the cellular space, which indicator indicates whether the second manifold having a lower dimension forms part of a first manifold having a higher dimension, said first and second manifolds being represented by the first and the second cell, respectively.

The transformation method, the compression method, the decompression method, the apparatus, the video decompression apparatus and the data representation according to the application will hereinafter be elucidated, by way of example, with reference to the drawings. In these drawings:

Fig. 1 is a block diagram of a method of transforming the computer representation of an object into the computer model,

Fig. 2 is a two-dimensional image of a three-dimensional scene,

Fig. 3 is a simple two-dimensional object for elucidating the construction of a cellular space model,

Fig. 4 is the cellular space model associated with the object of Fig. 3,

Fig. 5 shows two meshing annular objects,

Fig. 6 is a simplified representation of the cellular space model associated with the annular objects of Fig. 5,

Fig. 7 is a video cube with two objects,

Fig. 8 is a block diagram of a decompression method,

Fig. 9 is an apparatus for creating a cellular space model of an N-dimensional object,

Fig. 10 is a video decompression apparatus,

Fig. 11 is a T junction of two borders of three objects,

Fig. 12 is a symbolic representation of images succeeding each other time sequentially, and

Fig. 13 is a three-dimensional space-time object associated with the circle of Fig. 12.

In the following Figures, parts corresponding to parts of Figures already described are denoted by the same reference numerals. The reference numerals of corresponding parts of an object and the associated cellular space model only differ by one hundred. Parts shown in broken lines are optional. The methods and apparatuses are described with reference to three or two-dimensional objects in order to elucidate the ideas more clearly. The steps described may be mathematically formulated in an obvious manner for higher dimensions.

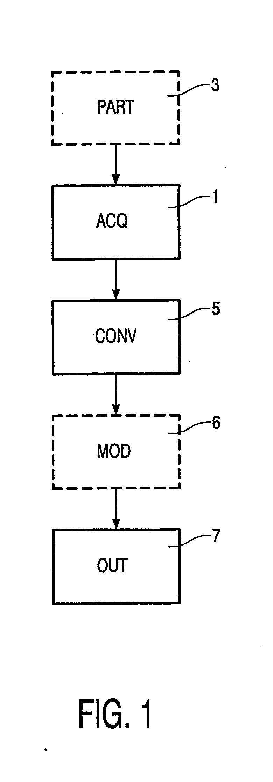

The second step of the transformation method of Fig. 1 is acquiring 1 the computer representation, for example, a voxel representation of an N-dimensional object. It is possible that a partitioning step 3 is performed prior to the acquiring step, in which partitioning step the object is partitioned from a video cube. Partitioning is the assignment of each pixel in the video cube to only one object. Algorithms for partitioning a three-dimensional video cube can be derived in a simple manner from algorithms, described in literature for two-dimensional image segmentation. A possible algorithm assigns cubes of, for example, 8x8x8 voxels to one and the same segment when a criterion indicates that they are of the same kind as regards a selected property. An example of a property is the grey value associated with a voxel. An example of a criterion is the absolute difference G of the histograms associated with two cubes of voxels:

$$G = \sum_{i=1}^{M} \left| C_i^{K1} - C_i^{K2} \right| / 2V \qquad\qquad [1]$$

In formula [1], i is the index of a histogram bin, in which all grey values in a video cube are divided into M bins. C is the number of grey values associated with a bin i in the cubes K1 and K2. The volume V of a cube is used as normalization constant. When the difference G is small, both cubes belong to one and the same segment in accordance with the segmentation algorithm. Different criteria are described in literature each of which can make use of different properties such as voxel grey value, voxel color, texture dimensions such as values obtained by Gabor filtering or values from a co-occurrence matrix, etc. In literature, there are also different segmentation algorithms grouping, for example, small segments to larger segments or, conversely, split up larger segments into smaller ones.

The obj ect may already have been modeled in accordance with a given model, for example, an octree. If desired, the octree model may be transformed to a voxel representation during the acquiring step. Alternatively, the cellular space model can be generated on the basis of, for example, a triangular mesh representation.

During the generation step 5 of Fig. 1, a cellular space is built up from the voxel representation. This will be illustrated with reference to Figs. 3 and 4.

Fig. 3 shows a simple two-dimensional figure 510 having a plane 511 which is bounded by a one-dimensional circular border 513 and three straight borders 514, 515 and 516. A straight border is bounded by two points, for example, the first straight border 514 is bounded by the first point 520 and the second point 521.

Fig. 4 shows diagrammatically the cellular space model 609 belonging to the figure shown in Fig. 3. There is one cell 611 with cell dimension two belonging to the plane 511. For all border manifolds on the border of the plane 511 whose dimension is one lower than two, an edge is added to the cellular space model 609 between cell 611 and the cell corresponding to the border manifold, for example, the edge 612 between cell 611 and cell 613 associated with a circular border 513. No edge is added between cells associated with manifolds which, as regards dimension, differ by more than one, for example, between cell 611 and cell 620 associated with the first point 520. An indicator, of which only indicator 625 has been shown for the sake of clarity of the Figure, is assigned to all edges. This indicator indicates whether the circular border 513 forms part of the plane 511 or, in other words, of the two-dimensional figure 510, in which case, for example, the value of one is assigned to the indicator. If the circular border 513 does not form part of the plane 511, for example, the value of zero is assigned to the indicator.

Fig. 2 illustrates what is meant by "forming part of" and shows a two-dimensional image of a three-dimensional scene in a space, for example, as picked up by a camera or as drawn diagrammatically in a computer drawing program. Object 13 is situated in the space in front of object 15. The plane 16 of object 15 is bounded by four straight borders, inter alia, a first straight border 17 and a second straight border 18. To give the indicator the correct value associated with the edge between the cell belonging to the plane 16 and the cell belonging to the first straight border 17, the question should be asked whether the first straight border 17 forms part of plane 16 or, equivalently, forms part of object 15. When this object represents, for example, the opening of a door in a wall, the first straight border 17 is associated with the door opening. A criterion therefor is, for example, that, when the door opening moves in consecutive video images, for example, picked by a panning camera, the first straight border 17 moves along with the door opening. For example, a fit of a straight line, for example, by making use of a Hough transform, at points of the border 17 found by means of an edge detector, for example, a Canny edge detector moves at the same speed and direction along with texture of the door opening, for example, a segment of pixels above a given grey value. If a door has enough texture information, a motion estimator may be used for determining the motion of the door, such as for example, the estimator described in patent application WO-A-0188852. The second straight border 18 also bounds the plane 16. Let it be assumed that the second straight border 18 forms the upper border of object 13 and that the real border of object 15 is hidden, for example, behind object 13. The second straight border 18 will then move along with object 13, for example, to the left when, for example, object 13 is a person walking to the left, and will not move along with object 15 moving, for example, to the right, for example, under the influence of the camera movement. The second straight border 18 thus does bound plane 16 but does not form part of plane 16 but does so of object 13. Different heuristics can be used to define by way of occlusion analysis with which object a border manifold is associated. A first heuristic defines, for example: when the cross-section of a first object in consecutive images decreases or increases, while the cross-section of a second adjoining object remains constant, the second object covers the first and the border manifolds form part of the second object.

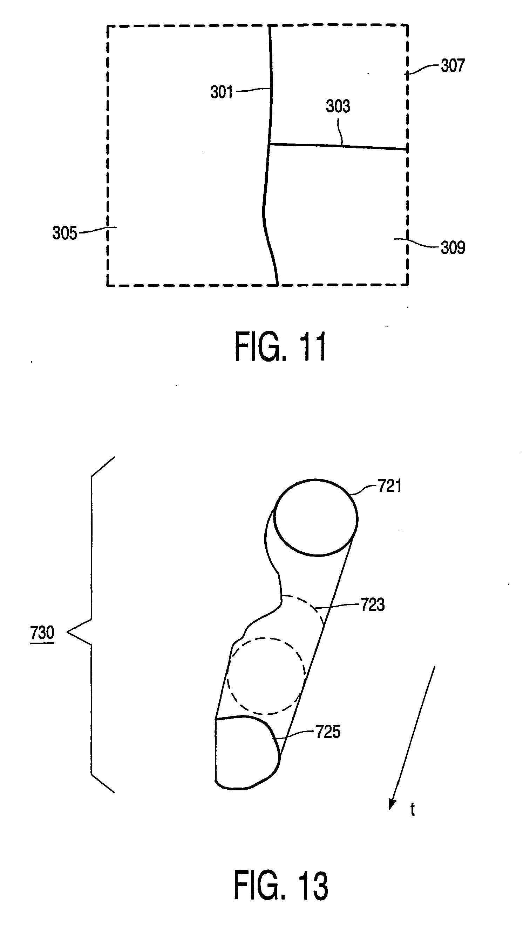

A second heuristic is illustrated with reference to Fig. 11. At a T junction of border 301 and border 303, the object 305 associated with the continuing border 301 is situated in front of the objects 307 and 309 and border 301 forms part of object 305.

A third heuristic analyzes with which adjoining texture a border moves. This may be effected by means of motion estimation. First, a texture analysis can be performed, for example, by computing Laws parameters or a wavelet or fractal analysis of the texture or an analysis of texture units can be performed. It is further possible to isolate segments having textures of the same type from the images and apply a segment-based motion estimator.

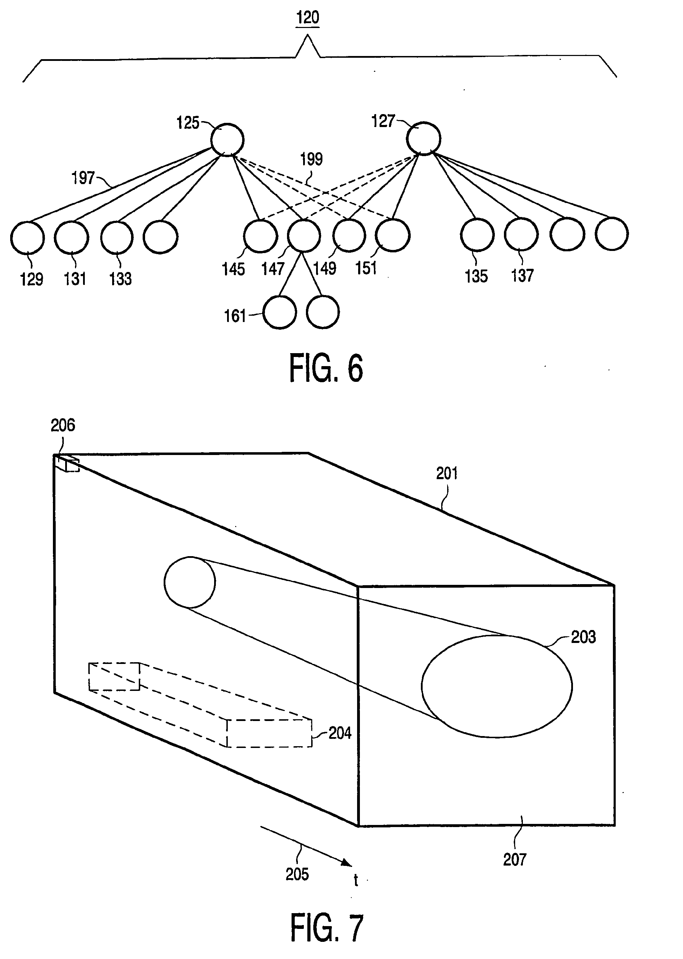

If a second object is present, for example, the second object 204 together with the first object 203 in the video cube 201 of Fig. 7, cells are also added in the cellular space model for the second object. For example, in Fig. 6, cells 125 and 127 have been added for the interior 25 of a first ring 21 and the interior 27 of a second ring 23, respectively, of Fig. 5. In Fig. 6, an indicator, denoted by broken lines, is associated with the value having the meaning of "not forming part of". For the sake of clarity of Fig. 6, the associated cells of only two points are shown.

It is interesting when not only a cellular space model 223 of the voxel representation is generated, the generation step 5 in Fig. 1, but also a metric model 222 is generated, the modeling step 6. For example, the two-dimensional envelope of a three-dimensional object may be metrically modeled by means of a triangular mesh model or another model known from the computer graphics technique. It is interesting to use metric algorithms also for generating border manifolds. To define the two-dimensional border surface of an object, for example, the barycenter of the object may be computed first and subsequently a point associated with the object which is farthest remote from the barycenter may be considered as a border point on a radius from the barycenter. Other algorithms for identifying the manifolds are known in the technical field of constructive solid geometry. The curved two-dimensional border surface of the object, obtained as the collection of all border points, may be modeled, for example, with only flat, not plane manifolds which are computed by means of a match with the two-dimensional border surface, at which a point of the flat, not plane manifold is never further remote from a point of the two-dimensional border surface than by a predetermined distance. Another example is given with reference to Fig. 3. It is obvious to describe a straight part of a border only by one straight border, for example, 516, but the straight border 516 may also be divided into two smaller straight borders which then belong to two cells in the cellular space 609. Furthermore, a texture function should also be assigned to the metric model. A possibility is to give all voxels of one manifold one and the same color. Another possibility is, for example, to add a polynomial texture model to a triangle in a triangular mesh representation. The parameters of the polynomial are then added to the compression model. The compression model and the cellular space give all the information which is necessary to reconstruct the object efficiently.

During the outputting step 7, the cellular space model and, if applicable, the metric model 222 is outputted, for example, to a memory 219 or via a data connection. It is interesting when the data of the metric model and the cellular space are used to generate a compression model 228, preferably an object-based compression model. For example, a three-dimensional wavelet model of the objects can be used as a compression model, using techniques which are known from the compression technique such as, for example, quantization of wavelet coefficients, while taking the characteristics of human vision and, for example, Huffman coding into account.

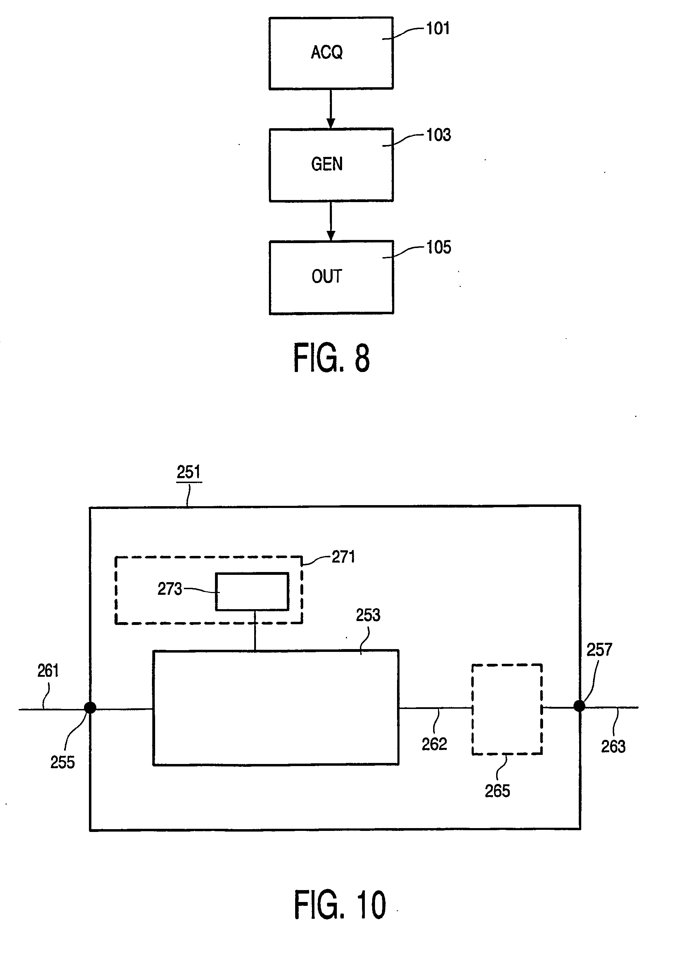

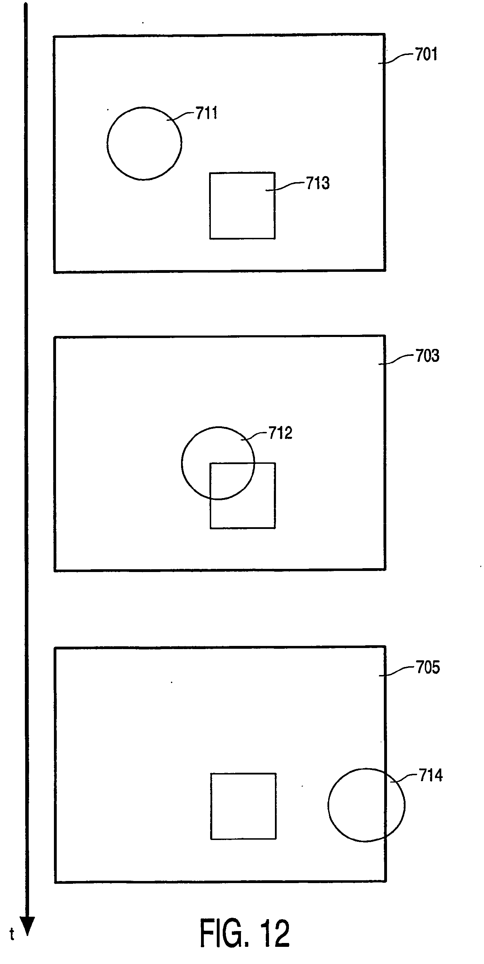

The advantage of using a cellular space model is that compression and decompression can be performed more efficiently than with a metric model only. This will be illustrated with reference to Figs. 12 and 13. In video sequences, it is usual that two objects occlude with each other. The square 713 remains in the same position in both the first image 701, the second image 703 and the third image 705. However, the circle moves behind the square and even goes beyond the frame in the third image. Fig. 13 represents the movement of the circle in the different images as a three-dimensional object 730. Since pieces of the circle have been occluded, i.e. are invisible in some images, the shape of the three-dimensional object 730 is irregular. For example, the cross-section 725 corresponding to the third position 714 of the circle is not circular because a part of the circle is beyond the image. However, in the three-dimensional space in which the movement has taken place, the circle has always remained circular. Thus it is possible to use a cylindrical model for the circle if the occlusion can also be modeled. This is effected in our method by means of the indicators in the cellular space model. During decompression, when the images of the video cube are to be generated from the compression model, the occlusion will be taken into account. For example, when regenerating the images, everything falling outside the image is clipped. The border is a special case of an occluding object. The regeneration of images is further elaborated in the description of Fig. 8. The change of objects in two-dimensional images may consist of translations, rotations and zooms with which simple three-dimensional objects are associated. More complex transformations model non-linear warps.

If, for example, a soccer ball rolls through an image, the texture modelization may optionally model a rotating texture function of the football or a static function which translates linearly, in which the ball will be observed as a sliding instead of a rolling ball at the receiver end. If the texture function varies with time, for example, by changes of illumination, a first option is to make use of very short three-dimensional objects modeling only a small part of the trajectory of an object, for example, through four frames. An alternative option is the use of time-variant texture functions, for example, a polynomial change of the grey value of a pixel in a system of reference axes coupled to the object.

Compression is important for many applications. Transport of data as compression applications is understood to mean, for example, Internet video, third and fourth generation mobile communications, video-on-demand over DSL (Digital Subscriber Line) and digital television. Storage is understood to mean, for example, high capacity record carriers such as, for example HDTV on digital discs such as a DVD, professional video servers, personal video recorders based on a hard disk on which, for example, many programs are recorded, though with a low quality, and proprietary compression in all kinds of systems. For low capacity storage, carriers such as video CD, small discs and solid-state memories are interesting. Video signals may originate from all kinds of sources ranging from satellite television to Internet video. The method may be used at the provider's end, for example, in a television studio, and at an intermediary's end, for example, a cable network company, as well as in the living room.

More dimensions than three can be obtained by constructing a so-called scale space, for example, for each frame. For example, the frame may be filtered with Gaussian filters in which the standard deviation $\sigma$ of the filter is increased continuously. The standard deviation then forms an extra dimension. Similarly as a video cube can be formed by putting frame one behind the other with respect to time, as in Fig. 7, the filtered frames, referred to as frames at a different scale, can also be placed one behind the other.

Another application of the cellular space model is computer vision. For example, when a robot must plan a motion trajectory in a three-dimensional space with reference to images picked up by a camera, he can make use of the cellular space model so as to define which manifolds in the frames belong to each other so that he can better compute the three-dimensional structure and placement of objects in the three-dimensional space. Another application is the recreation of a scene from another view point such as in three-dimensional television or video-on-demand. Furthermore, the cellular space model is also interesting when creating special effects. Another application is the structural decomposition of images on, for example, the Internet. When images having given objects must be found, these objects can be described by means of a cellular space model. A cellular space model is generated, for example, both for a sketch of the searched object made by a user of, for example, an image search program, and for images in a database on the Internet. The use of a cellular space model is also interesting in medical image-processing applications.

Fig. 8 is a block diagram of the method of decompressing a compressed video signal. First, the compressed signal is acquired 101, for example, the signal comes in via a television distribution cable or from a personal video recorder. If necessary, transformations are performed so as to achieve a usable metric model. For example, a part of the information in the compression model may be stored, for example, differentially, in which case the absolute values of model parameters are first to be computed and stored in the metric model. In a preferred embodiment, the cellular space model is supplied along with the compression model, although the cellular space model is computed at the receiver end in another embodiment.

Subsequently, a computer representation, is generated (step in Fig. 8) 103, e.g. a video cube 201, making use of the metric model and the cellular space model. In a first embodiment, a three-dimensional video cube comprising P frames can be generated directly. For example, the border of the three-dimensional objects is first generated and subsequently the interior is generated by means of, for example, a texture model. Alternatively, each frame may be generated individually in a second embodiment. The second embodiment is illustrated with reference to Fig. 12 and Fig. 5.

When, for example, the second image 703 is being generated, the borders of both the circle 712 and the square 713 are first computed by, for example, projection of their associated three-dimensional object on the plane of the second image 703. Subsequently, the respective texture functions are to be applied so as to color the pixels of the circle and the square. It should be computed whether either the circle or the square is in front. Since the border manifolds form part of the square, the square is in front. It follows that the texture function of the circle in its second position 712 must first be drawn and overwritten by the texture function of the square 713.

Fig. 5 shows a more difficult case of a first ring 21 and a second ring 23 which are interconnected in the space. The one-dimensional borders of the rings such as, for example, borders 29 and 31 are generated by means of a projection algorithm. Subsequently, the texture function is to be applied so as to color the pixels of the rings. For this purpose, for example, the painter's algorithm is used. This assigns the correct value to all pixels within the border of an obj ect. A chosen algorithm first draws the pixels of the first ring 21 and then the pixels of the second ring 23. In the area between the intersection 55 and delimiter 56, the pixels of the first ring 21 are unjustly overwritten by pixels of the second ring, if the chosen algorithm is used. Also when another chosen algorithm first draws the second ring, there are pixels that are wrong. This is because neither the first ring 21 nor the second ring 23 is everywhere in front. This problem can be solved by applying a cycle detection algorithm on the cellular space model. When a cycle is detected, an extra border manifold must be added, which is referred to as intersection, for example, intersection 55. The piece of the first ring 21 between intersection 55 and border 51 will then be drawn in a third drawing phase across the second ring. By making use of an algorithm inputting intersections and performing extra drawing phases, all pixels have a correct value.

During the outputting step 105, the video cube is written, for example, into a memory 271, or the consecutive images are sent to, for example, a picture display unit.

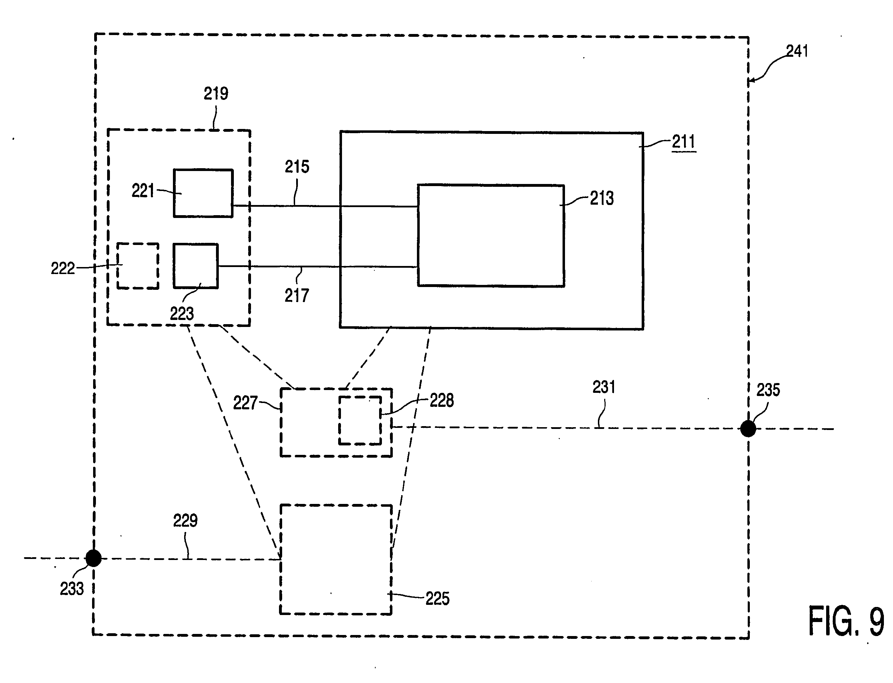

Fig. 9 shows an apparatus 211 for transforming a computer representation, for example, a voxel representation 221 of an N-dimensional first object 203 into a computer model of the object 203. To this end, the apparatus 211 comprises acquiring means 215, for example, a data connection for acquiring the voxel representation 221 of the first object 203. In a preferred embodiment, the voxel representation 221 is in a memory 219. Furthermore, the apparatus 211 comprises processing means 213 for generating the computer model on the basis of the voxel representation 221. In a preferred embodiment, the processing means 213 is a processor. The outputting means 217 for outputting the computer model is, for example, a data connection with the memory 219 in which the cellular space model 223 and a metric model 222 are written. It is interesting when the apparatus 211 is incorporated in a video processing apparatus 241. In one embodiment, the video processing apparatus 241 has an input 233 for a received video signal 229 and a conditioning unit 225 which can process the received video signal, for example, convert it from a PAL signal to a video cube. Furthermore, in the embodiment, an output 235 for an outgoing video signal 231 is provided, which video signal is formed by an output processing unit 227. It is, inter alia, interesting when the output processing unit 227 generates a compression model 228.

Fig. 10 shows a video decompression apparatus 251 for decompressing a compressed video signal 261 comprising a compression model to a computer representation 262, for example, a three-dimensional video cube 201. The video decompression apparatus 251 has an input 255 for a compressed video signal 261 and an output 257 for outputting a decompressed video signal 263, for example, a video cube 201. Optionally, an output-processing unit 265 is provided for converting, for example, the video cube to a PAL or NTSC signal. In a preferred embodiment of the video decompression apparatus 251, the processing unit 253 for generating the computer representation 262 is connected to a memory 271 in which a cellular space model 273 is stored.

**Claims**

1. A method of transforming a computer representation of an N-dimensional first object (21), which has at least a first, second and third dimension, into a computer model of the first object (120), wherein the computer model transformation comprises the step of generating a cellular space model having

   - a first cell (125) belonging to a first manifold (25) corresponding to the first object (21), the first manifold (25) having a dimension which is equal to N, and
   - a second cell (145) belonging to a second manifold (45) having a lower dimension which is equal to N-1 situated on a border of an image of the first object (21), **characterized in that** the cellular space model further more has
   - an edge between the first cell (125) and the second cell (145), the edge indicating that the second manifold forms part of a border of an image of the object (21),

- an indicator assigned to the edge between the first cell (125) and the second cell (145), the indicator indicating whether the second manifold (45) forms part of a border of the first manifold (25) in N dimensions.

2. A method of transforming as claimed in claim 1, **characterized in that** a third cell (127) belonging to a third manifold (27) is added to the cellular space model for a computer representation of an N-dimensional second object (23) and an edge between the third cell (127) and the second cell (145) being added to indicate that the second manifold (45) is situated on a border of an image of the second object (27).

3. A method of transforming as claimed in claim 2, **characterized in that** a three-dimensional video cube (201) consisting of two-dimensional images associated with consecutive instants and being placed one after the other is partitioned into regions corresponding to the first object (203) and the second object (204) on the basis of shared values of an image property, and **in that** the transformation generates the first cell and the third cell, the dimension of the first manifold and the third manifold being at most three.

4. A method of transforming as claimed in claim 3, **characterized in that** the transformation assigns a value to the indicator on the basis of a computation of at least one geometrical property, derived from values of the computer representation, the value being assigned according to at least one of

  - the value of the indicator being assigned to indicate that the second manifold forms part of the border of the first manifold when a cross-section of the first object in consecutive images decreases or increases, while a cross-section of the second object remains constant, or
  - the value of the indicator being assigned to indicate that the second manifold forms part of the border of the first manifold when the first object covers the second object
  - the value of the indicator being assigned to indicate that the second manifold forms part of the border of the first manifold when the second manifold continues through a T junction with another border;
  - the value of the indicator being assigned to indicate that the second manifold forms part of the border of the first manifold texture adjoining a border in the first manifold moves with the second manifold.

5. A method of transforming as claimed in any one of the preceding claims, **characterized in that** the cellular space model is used in a compressed representation of the first object.

6. A method of transforming as claimed in any one of the preceding claims **characterized in that** the method comprises decompressing a video signal using the cellular space model.

7. A computer program product comprising instructions for causing a computer to perform a method of transforming a computer representation of an N-dimensional first object (21), which has at least a first, second and third dimension, into a computer model of the first object (120), wherein the computer model transformation comprises the step of generating a cellular space model having

  - a first cell (125) belonging to a first manifold (25) corresponding to the first object (21), the first manifold (25) having a dimension which is equal to N, and
  - a second cell (145) belonging to a second manifold (45) having a lower dimension which is equal to N-1 situated on a border of an image of the first object (21),

  **characterized in that** the cellular space model has

  - an edge between the first cell (125) and the second cell (145), the edge indicating that the second manifold forms part of a border of an image of the object (21),
  - an indicator assigned to the edge between the first cell (125) and the second cell (145), the indicator indicating whether the second manifold (45) forms part of a border of the first manifold (25) in N dimensions.

8. A computer program product according to Claim 9, wherein the computer program is arranged to perform compression of the computer representation of first object, using the cellular space model.

9. A computer program product according to Claim 9, wherein the computer program performs a method of decompressing a compressed video signal to a computer representation of an N-dimensional object, **characterized in that** the decompression makes use of the cellular space model.

**10.** An apparatus for transforming a computer representation of an N-dimensional first object, which has at least a first, second and third dimension, into a computer model of the first object, the apparatus comprising

- acquiring means for acquiring the computer representation of the first object;
- processing means for transforming the computer representation of the first object; and
- output means for outputting the computer model, **characterized in that** the processing means are arranged to generate a cellular space model with
- a first cell (125) belonging to a first manifold (25) corresponding to the first object (21), the first manifold (25) having a dimension which is equal to N, and
- a second cell (145) belonging to a second manifold (45) having a lower dimension which is equal to N-1 situated on a border of an image of the first object (21), **characterized in that** the cellular space model has
- an edge between the first cell (125) and the second cell (145), the edge indicating that the second manifold forms part of a border of an image of the object (21),
- an indicator assigned to the edge between the first cell (125) and the second cell (145), the indicator indicating whether the second manifold (45) forms part of a border of the first manifold (25) in N dimensions.

**11.** An apparatus according to Claim 12, arranged to decompress a compressed video signal to a computer representation of an N-dimensional object, the apparatus comprising: acquiring means for acquiring the compressed video signal; -processing means for generating the computer representation on the basis of the compressed video signal, and output means for outputting the computer representation, **characterized in that** the processing means have access to a cellular space model.

**12.** A computer readable medium comprising a data structure comprising a cellular space for representing a digitized N-dimensional object, which has at least a first, second and third dimension, the data structure comprising

- a first cell (125) belonging to a first manifold (25) corresponding to the first object (21), the first manifold (25) having a dimension which is equal to N, and
- a second cell (145) belonging to a second manifold (45) having a lower dimension which is equal toN-1 situated on a border of an image of the first object (21), **characterized in that** the cellular space model has
- an edge between the first cell (125) and the second cell (145), the edge indicating that the second manifold forms part of a border of an image of the object (21),
- an indicator assigned to the edge between the first cell (125) and the second cell (145), the indicator indicating whether the second manifold (45) forms part of a border of the first manifold (25) in N dimensions.

**Patentansprüche**

**1.** Verfahren zum Transformieren einer Computerdarstellung eines N-dimensionalen ersten Objektes (21), das wenigstens eine erste, zweite und dritte Dimension hat, in ein Computermodell des ersten Objektes (120), wobei die Computermodelltransformation den Schritt der Erzeugung eines zellularen Raummodells umfasst, mit:

- einer ersten Zelle (125), die zu einer ersten Kopie (25) gehört, die dem ersten Objekt (21) entspricht, wobei die erste Kopie (25) eine Dimension hat, die N entspricht, und
- einer zweiten Zelle (145), die zu einer zweiten Kopie (45) gehört, die eine niedrigere Dimension hat, die N-1 entspricht, vorgesehen an einem Rand eines Bildes des ersten Objektes (21),

**dadurch gekennzeichnet, dass** das zellulare Raummodell weiterhin Folgendes umfasst:

- einen Rand zwischen der ersten Zelle (125) und der zweiten Zelle (145), wobei der Rand angibt, dass die zweite Kopie einen Teil eines Randes eines Bildes des Objektes (21) bildet,
- einen Indikator, zugeordnet zu dem Rand zwischen der ersten Zelle (125) und der zweiten Zelle (145), wobei der Indikator angibt, ob die zweite Kopie (45) einen Teil eines Randes der ersten Kopie (25) in N Dimensionen bildet.

**2.** Verfahren zum Transformieren nach Anspruch 1, **dadurch gekennzeichnet, dass** eine dritte Zelle (127), die zu einer dritten Kopie (27) gehört, zu dem zellularen Raummodell hinzugefügt wird für eine Computerdarstellung eines N-dimensionalen zweiten Objektes (23) und wobei ein Rand zwischen der dritten Zelle (127) und der zweiten Zelle (145) hinzugefügt wird um anzugeben, dass die zweite Kopie (45) sich an dem Rand eines Bildes des zweiten Objektes (27) befindet.

3. Verfahren zum Umwandeln nach Anspruch 2, **dadurch gekennzeichnet, dass** ein dreidimensionaler Videowürfel (21), der aus zweidimensionalen Bildern besteht, die mit aufeinander folgenden Zeitpunkten assoziiert sind und die hintereinander liegen, in Gebiete aufgeteilt wird, die dem ersten Objekt (203) und dem zweiten Objekt (204) entsprechen, und zwar auf Basis geteilter Werte einer Bildeigenschaft, und dass die Transformation die erste Zelle und die dritte Zelle erzeugt, wobei die Dimension der ersten Kopie und der dritten Kopie höchstens 3 ist.

4. Verfahren zum Transformieren nach Anspruch 3, **dadurch gekennzeichnet, dass** die Transformation dem Indikator auf Basis einer Berechnung von wenigstens einer geometrischen Eigenschaft einen Wert zuordnet, hergeleitet von Werten der Computerdarstellung, wobei der Wert entsprechend wenigstens einem der nachfolgenden Kriterien zugeordnet wird

   - der Wert des Indikators wird zugeordnet um anzugeben, dass die zweite Kopie einen Teil des Randes der ersten Kopie bildet, wenn ein Schnitt durch das erste Objekt in aufeinander folgenden Bildern abnimmt oder zunimmt, während ein Schnitt durch das zweite Objekt konstant bleibt, oder
   - der Wert des Indikators wird zugeordnet um anzugeben, dass die zweite Kopie einen Teil des Randes der ersten Kopie bildet, wenn das erste Objekt das zweite Objekt deckt,
   - der Wert des Indikators wird zugeordnet um anzugeben, dass die zweite Kopie einen Teil des Randes der ersten Kopie bildet, wenn die zweite Kopie sich über eine T-Verbindung mit einem anderen Rand fortsetzt,
   - der Wert des Indikators wird zugeordnet um anzugeben, dass die zweite Kopie einen Teil des Randes der ersten Kopiestruktur bildet, grenzend an einen Rand der ersten Kopie, und mit de zweiten Kopie sich verlagert.

5. Verfahren zum Transformieren nach einem der vorstehenden Ansprüche,
   **dadurch gekennzeichnet, dass** das zellulare Raummodell in einer komprimierten Darstellung des ersten Objektes verwendet wird.

6. Verfahren zum Transformieren nach einem der vorstehenden Ansprüche,
   **dadurch gekennzeichnet, dass** das Verfahren Dekompression eines Videosignals umfasst, wobei das zellulare Raummodell verwendet wird.

7. Computerprogrammprodukt mit Instruktionen um dafür zu sorgen, dass ein Computer ein Verfahren zum Transformieren einer Computerdarstellung eines N-dimensionalen ersten Objektes (21) durchführt, das wenigstens eine erste, eine zweite und eine dritte Dimension hat, zu einem Computermodell des ersten Objektes (120), wobei die Computermodeiltransformation den Schritt der Erzeugung eines zellularen Raummodells umfasst, das Folgendes aufweist: mit:

   - einer ersten Zelle (125), die zu einer ersten Kopie (25) gehört, die dem ersten Objekt (21) entspricht, wobei die erste Kopie (25) eine Dimension hat, die N entspricht, und
   - einer zweiten Zelle (145), die zu einer zweiten Kopie (45) gehört, die eine niedrigere Dimension hat, die N-1 entspricht, vorgesehen an einem Rand eines Bildes des ersten Objektes (21),

   **dadurch gekennzeichnet, dass** das zellulare Raummodell weiterhin Folgendes umfasst:

   - einen Rand zwischen der ersten Zelle (125) und der zweiten Zelle (145), wobei der Rand angibt, dass die zweite Kopie einen Teil eines Randes eines Bildes des Objektes (21) bildet,
   - einen Indikator, zugeordnet zu dem Rand zwischen der ersten Zelle (125) und der zweiten Zelle (145), wobei der Indikator angibt, ob die zweite Kopie (45) einen Teil eines Randes der ersten Kopie (25) in N Dimensionen bildet.

8. Computerprogrammprodukt nach Anspruch 7, wobei das Computerprogramm vorgesehen ist zum Durchführen einer Kompression der Computerdarstellung des ersten Objektes, und zwar unter Verwendung des zellularen Raummodells.

9. Computerprogrammprodukt nach Anspruch 7, wobei das Computerprogramm ein Verfahren zum Dekomprimieren eines komprimierten Videosignals zu einer Computerdarstellung eines N-dimensionalen Objektes durchführt, **dadurch gekennzeichnet, dass** die Dekompression das zellulare Raummodell benutzt.

**10.** Anordnung zum Transformieren einer Computerdarstellung eines N-dimensionalen ersten Objektes, das wenigstens eine erste, eine zweite und eine dritte Dimension hat, zu einem Computermodell des ersten Objektes, wobei diese Anordnung Folgendes umfasst:

- Erwerbungsmittel zum Erwerben der Computerdarstellung des ersten Objektes;
- Verarbeitungsmittel zum Transformieren der Computerdarstellung des ersten Objektes; und
- Ausgangsmittel zum Liefern des Computermodells, **dadurch gekennzeichnet, dass** die Verarbeitungsmitten vorgesehen sind zum Erzeugen eines zellularen Raummodells, mit
- mit:
- einer ersten Zelle (125), die zu einer ersten Kopie (25) gehört, die dem ersten Objekt (21) entspricht, wobei die erste Kopie (25) eine Dimension hat, die N entspricht, und
- einer zweiten Zelle (145), die zu einer zweiten Kopie (45) gehört, die eine niedrigere Dimension hat, die N-1 entspricht, vorgesehen an einem Rand eines Bildes des ersten Objektes (21),

**dadurch gekennzeichnet, dass** das zellulare Raummodell weiterhin Folgendes umfasst:

- einen Rand zwischen der ersten Zelle (125) und der zweiten Zelle (145), wobei der Rand angibt, dass die zweite Kopie einen Teil eines Randes eines Bildes des Objektes (21) bildet,
- einen Indikator, zugeordnet zu dem Rand zwischen der ersten Zelle (125) und der zweiten Zelle (145), wobei der Indikator angibt, ob die zweite Kopie (45) einen Teil eines Randes der ersten Kopie (25) in N Dimensionen bildet.

**11.** Anordnung nach Anspruch 10, vorgesehen zum Dekomprimieren eines komprimierten Videosignals zu einer Computerdarstellung eines N-dimensionalen Objektes, wobei die Anordnung Folgendes umfasst: Erwerbungsmittel zum Erwerben des komprimierten Videosignals; Verarbeitungsmittel zum Erzeugen der Computerdarstellung auf Basis des komprimierten Videosignals, und Ausgangsmittel zum Liefern der Computerdarstellung, **dadurch gekennzeichnet, dass** die Verarbeitungsmittel auf das zellulare Raummodell zugreifen können.

**12.** Von einem Computer auslesbares Medium mit einer Datenstruktur mit einem zellularen Raum zum Darstellen eines digitalisierten N-dimensionalen Objektes, das wenigstens eine erste, eine zweite und eine dritte Dimension hat, wobei die Datenstruktur Folgendes umfasst:

- eine erste Zelle (125), die zu einer ersten Kopie (25) gehört, die dem ersten Objekt (21) entspricht, wobei die erste Kopie (25) eine Dimension hat, die N entspricht, und
- eine zweite Zelle (145), die zu einer zweiten Kopie (45) gehört, die eine niedrigere Dimension hat, die N-1 entspricht, vorgesehen an einem Rand eines Bildes des ersten Objektes (21),

**dadurch gekennzeichnet, dass** das zellulare Raummodell weiterhin Folgendes umfasst:

- einen Rand zwischen der ersten Zelle (125) und der zweiten Zelle (145), wobei der Rand angibt, dass die zweite Kopie einen Teil eines Randes eines Bildes des Objektes (21) bildet,
- einen Indikator, zugeordnet zu dem Rand zwischen der ersten Zelle (125) und der zweiten Zelle (145), wobei der Indikator angibt, ob die zweite Kopie (45) einen Teil eines Randes der ersten Kopie (25) in N Dimensionen bildet.

### Revendications

**1.** Procédé de transformation d'une représentation informatique d'un premier objet à N dimensions (21), qui a au moins une première, deuxième et troisième dimension, en un modèle informatique du premier objet (120) dans lequel la transformation du modèle informatique comprend l'étape de génération d'un modèle spatial cellulaire ayant

- une première cellule (125) appartenant à une première variété (25) correspondant au premier objet (21), la première variété ayant une dimension égale à N, et
- une deuxième cellule (145) appartenant à une deuxième variété (45) ayant une dimension inférieure qui est égale à N-1 située sur une frontière d'une image du premier objet (21), **caractérisée en ce que** le modèle spatial cellulaire a en outre
- une arête entre la première cellule (125) et la deuxième cellule (145), l'arête indiquant que la deuxième variété fait partie d'une frontière de l'image de l'objet (21),
- un indicateur assigné à l'arête entre la première cellule (125) et la deuxième cellule (145), l'indicateur indiquant si la deuxième variété fait partie d'une frontière de la première variété (25) à N dimensions.

2. Procédé de transformation selon la revendication 1, **caractérisé en ce que** une troisième cellule (127) appartenant à une troisième variété (27) est ajoutée au modèle spatial cellulaire pour une représentation informatique d'un deuxième objet à N dimensions (23) et une arête entre la troisième cellule (127) et la deuxième cellule (145) étant ajoutée pour indiquer que la deuxième variété (45) est située sur une frontière d'une image du deuxième objet (27).

3. Procédé de transformation selon la revendication 2, **caractérisé en ce que** un cube vidéo à trois dimensions (201) constitué d'images à deux dimensions associées à des instants consécutifs et placées l'une après l'autre, est partitionné en régions correspondant au premier objet (203) et au deuxième objet (204) sur la base de valeurs partagées d'une propriété de l'image, et **en ce que** la transformation génère la première cellule et la troisième cellule, la dimension de la première variété et de la troisième variété étant au plus de trois.

4. Procédé de transformation selon la revendication 3, **caractérisé en ce que** la transformation assigne une valeur à l'indicateur sur base d'un calcul d'au moins une propriété géométrique, dérivée des valeurs de la représentation informatique, la valeur étant assignée selon au moins une des affirmations suivantes :

    - la valeur de l'indicateur étant assignée pour indiquer que la deuxième variété fait partie de la frontière de la première variété quand une coupe transversale du premier objet dans des images consécutives augmente ou diminue, tandis qu'une coupe transversale du deuxième objet reste constante, ou
    - la valeur de l'indicateur étant assignée pour indiquer que la deuxième variété fait partie de la frontière de la première variété quand le premier objet couvre le deuxième objet
    - la valeur de l'indicateur étant assignée pour indiquer que la deuxième variété fait partie de la frontière de la première variété quand la deuxième variété continue à travers une jonction en T avec une autre frontière;
    - la valeur de l'indicateur étant assignée pour indiquer que la deuxième variété fait partie de la frontière de la texture de la première variété adjointe à une frontière de la première variété et bouge avec la deuxième variété.

5. Procédé de transformation selon l'une quelconque des revendications précédentes, **caractérisé en ce que** le modèle spatial cellulaire est utilisé dans une représentation comprimée du premier objet.

6. Procédé de transformation selon l'une quelconque des revendications précédentes, **caractérisé en ce que** le procédé comprend la décompression d'un signal vidéo en utilisant le modèle spatial cellulaire.

7. Produit programme informatique comprenant des instructions pour amener un ordinateur à exécuter un procédé de transformation d'une représentation informatique d'un premier objet à N dimensions (21), qui a au moins une première, deuxième et troisième dimension, en un modèle informatique du premier objet (120), la transformation du modèle informatique comprenant l'étape de génération d'un modèle spatial cellulaire ayant

    - une première cellule (125) appartenant à une première variété (25) correspondant au premier objet (21), la première variété (25) ayant une dimension qui est égale à N, et
    - une deuxième cellule (145) appartenant à une deuxième variété (45) ayant une dimension inférieure qui est égale à N-1 située sur une frontière d'une image du premier objet (21), **caractérisée en ce que** le modèle spatial cellulaire a
    - une arête entre la première cellule (125) et la deuxième cellule (145), l'arête indiquant que la deuxième variété fait partie d'une frontière d'une image de l'objet (21),
    - un indicateur assigné à l'arête entre la première cellule (125) et la deuxième cellule (145), l'indicateur indiquant si la deuxième variété (45) fait partie d'une frontière de la première variété (25) à N dimensions.

8. Produit programme informatique selon la Revendication 9, dans lequel le programme informatique est monté pour réaliser la compression de la représentation informatique du premier objet, en utilisant le modèle spatial cellulaire.

9. Produit de programme informatique selon la Revendication 9, dans lequel le programme informatique exécute un procédé de décompression d'un signal vidéo comprimé en une représentation informatique d'un objet à N dimensions, **caractérisé en ce que** la décompression fait usage d'un modèle spatial cellulaire.

10. Appareil pour transformer une représentation informatique d'un premier objet à N dimensions, qui a au moins une première, deuxième et troisième dimension, en un modèle informatique du premier objet, l'appareil comprenant

- des moyens d'acquisition pour acquérir la représentation informatique du premier objet;
- des moyens de traitement pour transformer la représentation informatique du premier objet; et
- des moyens de sortie pour sortir le modèle informatique, **caractérisé en ce que** les moyens de traitement sont montés pour produire un modèle spatial cellulaire avec
- une première cellule (125) appartenant à une première variété (25) correspondant au premier objet (21), la première variété (25) ayant une dimension qui est égale à N, et
- une deuxième cellule (145) appartenant à une deuxième variété (45) ayant une dimension plus basse qui est égale à N-1 située sur une frontière d'une image du premier objet (21), **caractérisée en ce que** le modèle spatial cellulaire a
- une arête entre la première cellule (125) et la deuxième cellule (145), l'arête indiquant que la deuxième variété fait partie d'une frontière d'une image de l'objet (21),
- un indicateur assigné à l'arête entre la première cellule (125) et la deuxième cellule (145), l'indicateur indiquant si la deuxième variété (45) fait partie d'une frontière de la première variété (25) à N dimensions.

**11.** Appareil selon la Revendication 12, aménagé pour décomprimer un signal vidéo comprimé en une représentation informatique d'un objet à N dimensions, l'appareil comprenant :

- des moyens d'acquisition pour acquérir le signal vidéo comprimé;
- des moyens de traitement pour produire en sortie la représentation informatique sur base du signal vidéo comprimé, des moyens de sortie pour sortir la représentation informatique, **caractérisée en ce que** les moyens de traitement ont accès à un modèle spatial cellulaire.

**12.** Support informatique lisible comprenant une structure de données comprenant un modèle spatial cellulaire pour représenter un objet numérisé à N dimensions, qui a au moins une première, deuxième et troisième dimension, la structure de données comprenant

- une première cellule (125) appartenant à une première variété (25) correspondant au premier objet (21), la première variété (25) ayant une dimension qui est égale à N, et
- une deuxième cellule (145) appartenant à une deuxième variété (45) ayant une dimension inférieure qui est égale à N-1 située sur une frontière d'une image du premier objet (21), **caractérisée en ce que** le modèle spatial cellulaire a :
- une arête entre la première cellule (125) et à la deuxième cellule (145), l'arête indiquant que la deuxième variété fait partie d'une frontière d'une image de l'objet (21),
- un indicateur assigné à l'arête entre la première cellule (125) et la deuxième cellule (145), l'indicateur indiquant si la deuxième variété (45) fait partie d'une frontière de la première variété (25) à N dimensions.

FIG. 1

FIG. 2

FIG. 3

FIG. 4

FIG. 5

FIG. 6

FIG. 7

FIG. 8

FIG. 10

FIG. 9

FIG. 11

FIG. 13

FIG. 12